# EUROPEAN PATENT APPLICATION

(11) **EP 1 712 849 A2**
(43) Date of publication of application: **18.10.2006**
(21) Application number: 06007607.2
(22) Date of filing: 11.04.2006
(51) Int. Cl.: F24F 13/02, F24F 13/24

(54) **Antivibration arrangement of air conditioner**

(30) Priority: 11.04.2005 KR 20050029997
(71) Applicant: LG ELECTRONICS INC., Seoul 150-010 (KR)
(72) Inventor: Lee, Jung Woo, Kangseo-ku Seoul 157-018 (KR); Bae, Seong Won, Dongjak-ku Seoul 156-035 (KR); Chin, Sim Won, Yangchun-ku Seoul 158-054 (KR)
(74) Representative: Vossius & Partner

(57) **Abstract**

An antivibration arrangement of an air conditioner is disclosed, which includes an antivibration container (62) installed on a structure of the air conditioner and having an inner space; and a flowing material (64) contained in the antivibration container (62) so as to be movable in the inner space of the antivibration container (62) as the structure (52) of the air conditioner vibrates, whereby it is possible to prevent vibration and noise, impact and deformation of a structure and eliminate a resonance within the range of vibration frequencies occurring in the structure (52) of the air conditioner by changing the natural vibration frequency and vibration displacement of the structure (52) of the air conditioner.

## Description

The present invention relates to an antivibration arrangements of an air conditioner, and more particularly, to an antivibration arrangement of an air conditioner which is mounted on a structure so as to change the natural vibration frequency of a compressor, piping and other structures constituting a vibrating structure, or reduce the vibration displacement during a resonance.

In general, an air conditioner is a device for controlling a temperature, humidity and air current distribution of a certain space by having a basic structure of a refrigeration cycle constructed so that a refrigerant circulates through a compressor, a condenser, an expansion mechanism and an evaporator by means of piping. Recently, there is a growing trend of inverter air conditioners configured to meet user preferences and cooling conditions and vary the refrigerating performance by converting inputs of a compressor and of other driving devices for power saving.

Meanwhile, in the air conditioner, when an antivibration arrangement made of a mass body is attached to a vibration structure, such as piping, the natural vibration frequency of the vibration structure can be changed or the vibration displacement can be reduced.

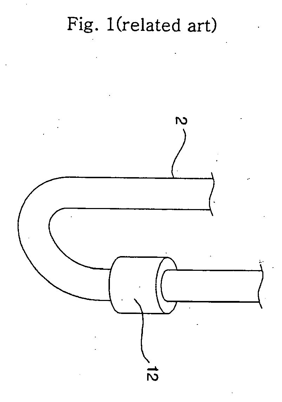

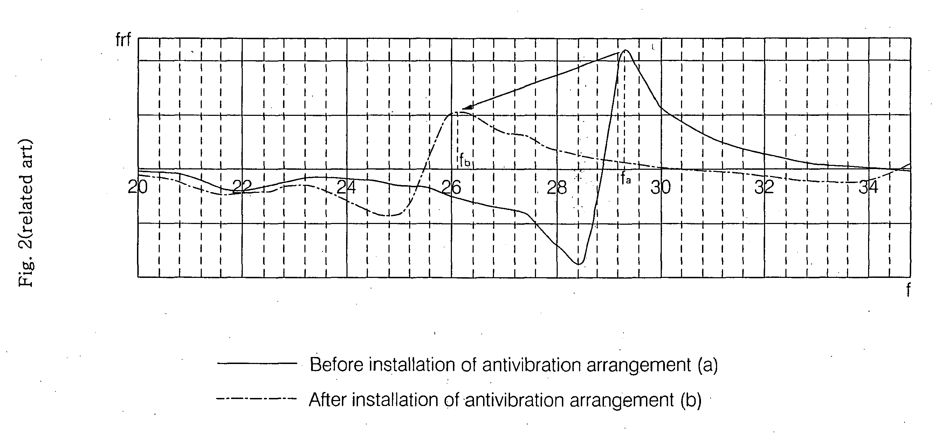

FIG.1 is a perspective view of an antivibration arrangement being installed to piping of an air conditioner in accordance with the prior art. FIG.2 is a frequency diagram illustrating a vibration frequency (f) and a vibration displacement (frf) shown on the piping with respect to before and after the installation of the antivibration arrangement as illustrated in FIG.1.

As illustrated in FIG.1, the antivibration arrangement of the air conditioner in accordance with the prior art is made of a mass body 12, and fixed and installed at a portion where the vibration of the air conditioner piping 2 appears strongly. In the piping 2 where the mass body 12 is installed, as illustrated in FIG.2, the natural vibration frequency (fa > fb) and the vibration displacement (frf(fa) > frf(fb)) are reduced.

However, the antivibration arrangement in accordance with the prior art reduces the natural vibration frequency (fa > fb) and the vibration displacement (frf(fa) > frf(fb)) of the structure only to move a resonance region. Accordingly, in a case where the vibration frequency of the structure appears over a wide range, resonance cannot be avoided simply by moving the resonance region.

The present invention has been devised in order to solve the foregoing problems and its object is to provide a an antivibration arrangement of an air conditioner which is constructed so as to change the natural vibration frequency of a compressor, piping and other structures constituting a vibrating structure, especially, an air conditioner, or reduce the vibration displacement during a resonance and, further so as to prevent the occurrence of a resonance within the range of vibration frequencies appearing on the structure, and which is mounted on the structure.

To achieve the above object, there is provided an antivibration arrangement of an air conditioner, including an antivibration container installed on a structure of the air conditioner and having an inner space; and a flowing material contained in the antivibration container so as to be movable in the inner space of the antivibration container as the structure of the air conditioner vibrates.

The flowing material is composed of at least either one of a solid and a fluid whose position and shape change in the inner space of the antivibration container in the direction in which gravity acts.

The flowing material includes: a mass body; and an elastic unit installed between the antivibration container and the mass body, for elastically supporting the mass body.

The flowing material further includes a damping unit installed between the antivibration container and the mass body, for alleviating the vibration of the mass body.

The mass body is composed of a solid, and the elastic unit is a spring.

The flowing material includes: a mass body; and a damping unit installed between the antivibration container and the mass body, for alleviating the vibration of the mass body.

The mass body is composed of a solid, and the damping unit is composed of a lubricant for reducing friction between the mass body and the antivibration container.

The antivibration container has an on-off valve for putting in, discharging or sealing the flowing material.

The antivibration arrangement further includes a fastening unit for mounting the antivibration container on the piping or compressor of the air conditioner.

The antivibration container is formed in a structure that is bilaterally symmetrical from the fastening unit.

The antivibration container is formed in a tube shape with a curvature.

The antivibration container is formed in a cruciform shape.

The flowing material moves in the inner space of the antivibration container so as to prevent a resonance within the range of vibration frequencies occurring in the structure when operating the air conditioner.

The antivibration arrangement of the air conditioner in accordance with the present invention is mounted on a structure of the air conditioner and reduces the vibration displacement of the structure, and accordingly has an advantage of preventing vibration of the structure and noise, impact and deformation of the structure caused by vibration.

Moreover, the antivibration arrangement of the air conditioner in accordance with the present invention is mounted on a structure of the air conditioner and changes the natural vibration frequency of the structure, and accordingly has an advantage of eliminating a resonance within the range of vibration frequencies occurring in the structure.

Moreover, the antivibration arrangement of the air conditioner in accordance with the present invention is able to control a vibration response appearing in different ways in different structures by control of the amount of the flowing material, and accordingly has an advantage of mass-producing antivibration containers of the same shape applicable to different structures.

### In the drawings:

FIG.1 is a perspective view of an antivibration arrangement being installed to piping of an air conditioner in accordance with the prior art;
FIG.2 is a frequency diagram illustrating a vibration frequency (f) and a vibration displacement (frf) shown on the piping with respect to before and after the installation of the antivibration arrangement as illustrated in FIG.1;
FIG.3 is an exploded perspective view illustrating a first embodiment of an antivibration arrangement in accordance with the present invention;
FIG.4 is a block diagram illustrating the shape of the antivibration arrangement in accordance with the first embodiment of the present invention being mounted on piping of an air conditioner;
FIG.5 is a front view illustrating a non-vibrating state of the antivibration arrangement of FIG.4;
FIG.6 is a front view illustrating a vibrating state of the antivibration arrangement of FIG.4;
FIG.7 is a frequency diagram illustrating a vibration frequency (f) and a vibration displacement (frf) shown on the piping with respect to before and after the installation of the antivibration arrangement as illustrated in FIG.4;
FIG.8 is an exploded perspective view illustrating a second embodiment of an antivibration arrangement in accordance with the present invention;
FIG.9 is a front block diagram illustrating a third embodiment of the antivibration arrangement in accordance with the present invention;
FIG.10 is a front cutaway view illustrating a fourth embodiment of the antivibration arrangement in accordance with the present invention;
FIG.11 is a perspective view illustrating a fifth embodiment of the antivibration arrangement in accordance with the present invention; and
FIG.12 is a front block diagram illustrating a sixth embodiment of the antivibration arrangement in accordance with the present invention.

Hereinafter, embodiments of an antivibration arrangement of an air conditioner in accordance with the present invention will be described with reference to the accompanying drawings.

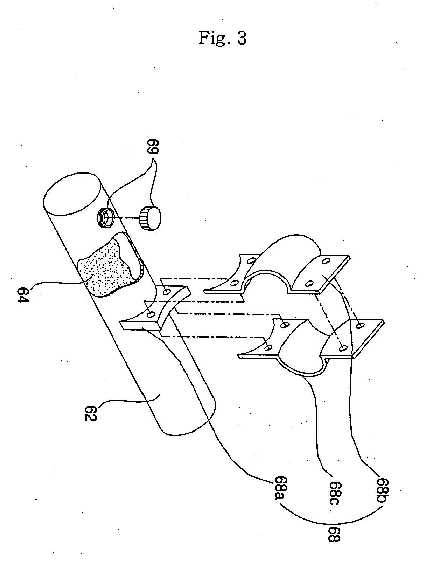

FIG.3 is an exploded perspective view illustrating a first embodiment of an antivibration arrangement in accordance with the present invention.

As illustrated therein, the antivibration arrangement of an air conditioner, includes: an antivibration container 62 mounted on a structure, particularly, piping 52 of the air conditioner and having an inner space; a flowing material 64 contained in the antivibration container 62 so as to be movable in the inner space of the antivibration container 62 as the piping 52 on which the antivibration container 62 is mounted vibrates; and a fastening unit 68 constructed to mount the antivibration container 62 on the piping 52 of the air conditioner.

The antivibration container 62 is formed in a tube shape that is bilaterally symmetrical from the fastening unit 68, and whose both opposite sections are sealed. A section of this tube has a circular shape but is not limited thereto and the section of the tube may have the shape of a semicircle, polygon, etc., the cross sectional area of the may increase or decrease as both opposite ends are approached, or the antivibration container may have a certain polyhedral shape that can contain the flowing material.

Preferably, the antivibration container 62 has an on-off valve 69 that is formed on the circumferential surface of the tube and opened and shut so that the flowing material can be put in, discharged or sealed, but is not limited thereto and the on-off valve may be formed on both opposite sections of the tube or the flowing material may be simply sealed without an on-off valve.

Preferably, the on-off valve includes a screw cap; and a projection formed on the antivibration container so as to be opened and shut by the screw cap, but is not limited thereto and any other construction can be used provided that it can be opened so as to adjust the constituents or amount of the flowing material and shut so as not to leak out the flowing material when the antivibration container vibrates.

The flowing material 64 is made up of water having a volume filling parts of the inner space of the antivibration container, but not limited thereto and any other material, such as air, nitrogen gas, water, sodium water, oil, soil, etc., can be used provided that they can be smoothly moved in the inner space of the antivibration container as vibration occurs, they move in the direction in which gravity acts and are changed in shape, and the constituents or amount thereof can be adjusted easily.

The fastening unit 68 includes: a plurality of fastening elements for coupling to holes provided respectively at two or more devices to be connected, for securing the devices to be connected to each other; a container fastening part 68a formed projecting on the antivibration container and provided with two holes that each of the fastening elements is coupled to; and two left and right attachment plates 68b and 68c, whose middle portions are formed according to the shape of the piping so as to be tightly contacted to the piping, and one side of which is provided with two holes for attaching and coupling to the container fastening part by the fastening elements and the other side of which is provided with two holes for coupling each other by the fastening elements.

The fastening elements may include any components, such as a bolt, nut, washer, rivet, etc., that secure a plurality of devices to be connected through a hole.

Although the fastening unit is constructed so as to be mounted on the piping of the air conditioner by the above construction, but not limited thereto and it should be noted that the fastening unit may be constructed by using any technical means that can be adopted by those skilled in the art, including other constructions for mounting it to the piping of the air conditioner or constructions for mounting it to a compressor or other structures of the air conditioner.

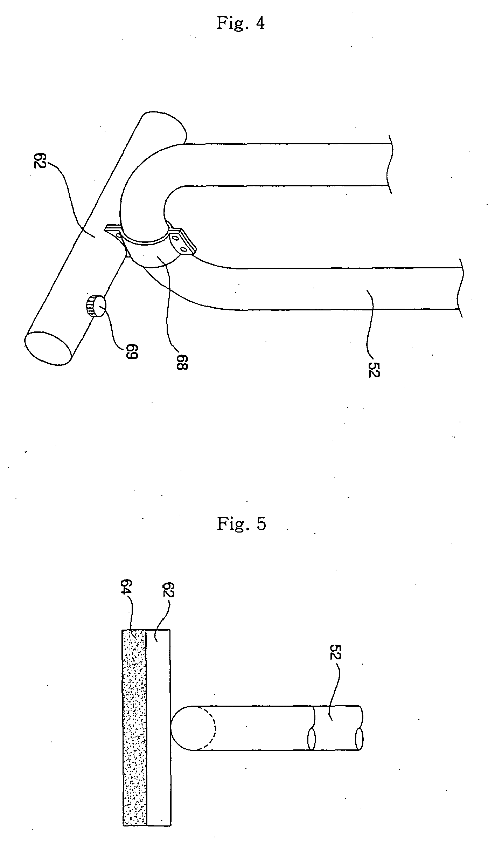

FIG.4 is a block diagram illustrating the shape of the antivibration arrangement in accordance with the first embodiment of the present invention being mounted on piping of an air conditioner.

As illustrated therein, preferably, the antivibration arrangement 60 is coupled to a U-shaped tube part where the shear deformation or vibration displacement of the entire piping appears strongly due to vibration.

Preferably, the fastening unit 68 has the antivibration container 62 and the piping 52 mounted firmly thereon so that the position of the antivirbation arrangement 60 cannot be changed due to vibration.

Preferably, the antivibration container 62 is installed under the U-shaped tube part, both opposite ends of the tube of the antivibration container 62, and the direction of the tube passage of the antivibration arrangement 62 is perpendicular to the gravity direction so that the flowing material is uniformly distributed to the left and right sides of the fastening unit.

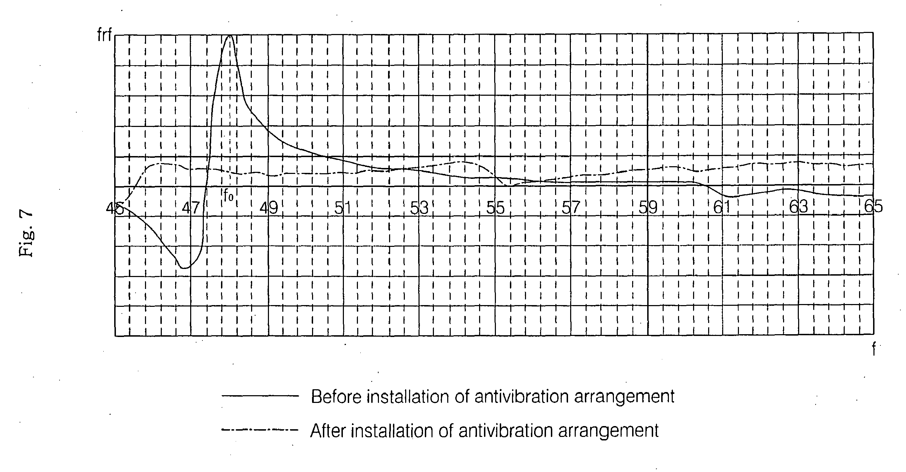

The flowing material is adjusted in quantity such that the natural vibration frequency of the piping is distributed and the vibration displacement at the natural vibration frequency is reduced, and then stored in the antivibration container, as illustrated in FIG.7.

The operation of the first embodiment of the antivibration arrangement thus-constructed in accordance with the present invention will be described below.

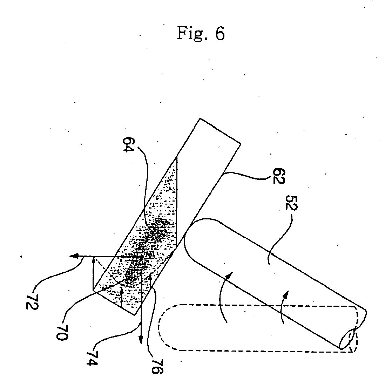

FIG.5 is a front view illustrating a non-vibrating state of the antivibration arrangement of FIG.4. FIG.6 is a front view illustrating a vibrating state of the antivibration arrangement of FIG.4. FIG.7 is a frequency diagram illustrating a vibration frequency (f) and a vibration displacement (frf) shown on the piping with respect to before and after the installation of the antivibration arrangement as illustrated in FIG.4.

As illustrated in FIGs.5 and 6, the antivibration arrangement 62 vibrates along with the piping 52, while the flowing amterial 64 moves within the antivibration container 62 as the antivibration container 62 vibrates.

That is, the flowing material 64 acquires a movable region by the inner space of the antivibration container 62, and its boundary is restricted by inner walls of the antivibration container 62. Accordingly, the flowing material 64 attempts to move according to a pressure 76 transferred by the vibration of the inner walls of the antivibration container, to move while keeping its position, shape and movement by an inertia 74 and to move toward the gravity direction by a gravity 72.

As described above, the flowing material 64 receives the wall pressure 76, inertia force 74 and gravity 72 when the antivibration container 62 vibrates. Thus, when considering the probability distribution of the position of the flowing material, as illustrated in FIG.6, the flowing material 64 is concentrated to one side of the antivibration container 62 according- to the vibration displacement of the piping 52, and therefore the centroid 70 of the antivibration arrangement 60 is changed due to the movement of the flowing material 64.

In the piping 52 on which the antivibration arrangement 60 is mounted, an exciting force generating a vibration, a restoration force using the elasticity of the piping 52, the weight and inertia force of the piping 52 and antivibration arrangement 60 and the like act as primary forces involved in vibration. These forces change since the centroid 70 of the antivibration arrangement changes, particularly, the natural vibration frequency and vibration displacement change in a different pattern than the prior art case in which only a mass body is mounted to the piping.

That is, as illustrated in FIG.7, the natural vibration frequency f0 that has existed in certain vibration frequency regions disappears, and no more resonance phenomenon occurs near the vibration frequency regions.

It is needless to say that the pattern of the probability distribution of the flowing material and the frequency response of the piping may be different according to the properties, like mass, density and viscosity, of the flowing material, the vibration frequency and vibration displacement of the piping and other various conditions.

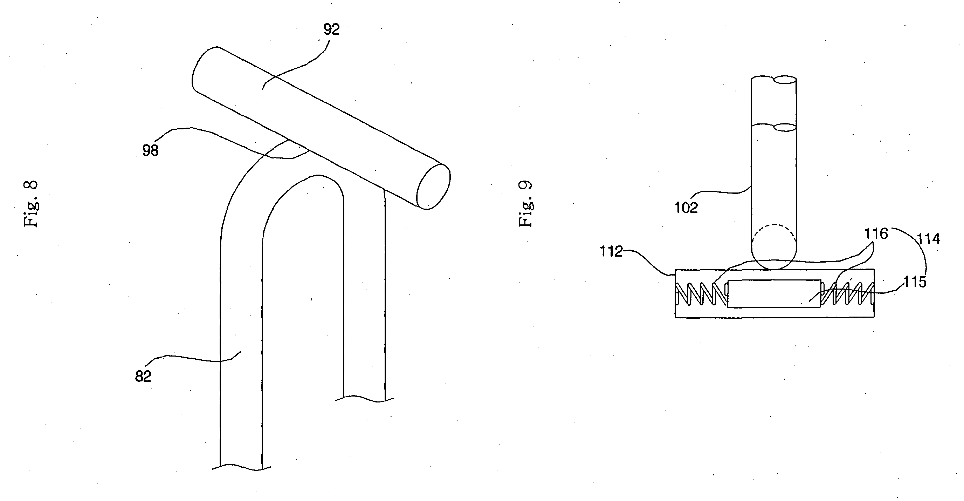

FIG.8 is an exploded perspective view illustrating a second embodiment of an antivibration arrangement in accordance with the present invention.

As illustrated therein, the antivibration arrangement 90 in accordance with the second embodiment of the present invention is constructed in the same manner as the antivibration arrangement of the first embodiment, except for a fastening unit 98, an on-off valve formed on an antivibration container and the position installed on piping 82 of an air conditioner.

That is, it is preferred that the fastening unit 98 is bonded to the antivibration container by the medium of synthetic resin or welded thereto according to the material of the piping in order to minimize the volume of the fastening unit.

The antivibration container 92 is constructed such that no on-off valve is formed and its inner space is sealed.

The antivibration arrangement 90 is installed such that the antivibration container 92 is positioned over the U-shaped piping 82, but not limited thereto and the antivibration container 92 may be positioned under the U-shaped piping.

Meanwhile, the flowing material is adjusted in quantity such that the natural vibration frequency of the piping is distributed and the vibration displacement at the natural vibration frequency is reduced, and then stored in the antivibration container. However, the gravity may be applied in the direction of increasing vibration according to the vibration displacement of the piping, and therefore, even if the piping is disposed symmetrical with that of the first embodiment, the quantity of the flowing material is set to other values.

FIG.9 is a front block diagram illustrating a third embodiment of the antivibration arrangement in accordance with the present invention.

As illustrated therein, the antivibration arrangement 110 in accordance with the third embodiment of the present invention is constructed in the same manner as the antivibration arrangement of the first embodiment, except for a flowing material 114, a fastening unit and an on-off valve of an antivibration container 112.

That is, the flowing material 114 includes: a mass body 115; and an elastic unit 116 installed between the antivibration container 112 and the mass body 115, for alleviating vibration so as to fix the position of the mass body 115.

Preferably, the mass body 115 is composed of a solid having a high density.

Preferably, the elastic unit 116 includes two springs having the same elastic coefficient so that the mass body is connected to both opposite ends of the antivibration container and the mass body is positioned at the center of the antivibration container.

Preferably, the fastening unit is bonded to the antivibration container 112 by the medium of synthetic resin or welded thereto according to the material of piping 102 in order to minimize the volume of the fastening unit.

The antivibration container 112 is constructed such that no on-off valve is formed and its inner space is sealed.

Preferably, a lubricant is coated on the inside of the antivibration container 112 in order to reduce the friction between the antivibration container 112 and the mass body 115.

The mass body 115 and the elastic means 116 is installed with their mass and the elastic coefficient of the elastic unit adjusted in order to disperse the natural vibration frequency of the piping 102 and reduce the vibration displacement at the natural vibration frequency.

The operation of the third embodiment of the antivibration arrangement in accordance with the present invention thus constructed will no be described.

The operation of the third embodiment is basically identical to the operation of the first embodiment, except that as the mass body 115 receives an inertia, a gravity and an elastic force of the elastic unit 116 along with the vibration of the antivibration container 112, it moves within the antivibration container 112.

As described above, since the centroid of the antivibration arrangement 110 changes upon vibration, the above forces change, especially, the natural vibration frequency and vibration displacement change in a different pattern than the prior art case in which only a mass body is mounted to the piping. Accordingly, the natural vibration frequency that has been existed in certain vibration frequency regions disappears, and no more resonance phenomenon occurs near the vibration frequency regions.

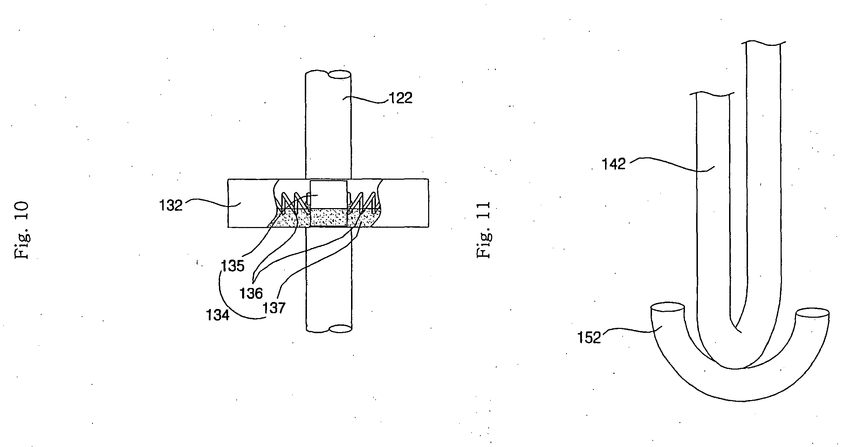

FIG.10 is a front cutaway view illustrating a fourth embodiment of the antivibration arrangement in accordance with the present invention.

As illustrated therein, the antivibration arrangement 130 in accordance with the fourth embodiment of the present invention is constructed in the same manner as the antivibration arrangement of the third embodiment, except for a flowing material 134 and the position installed on piping 112 of an air conditioner.

That is, the flowing material includes: a mass body 135; and an elastic unit 136 and a damping unit 137 installed between the antivibration container 132 and the mass body 135, for alleviating the vibration of the mass body 135.

Preferably, the mass body 135 is composed of a solid having a high density.

Preferably, the damping unit 137 is a lubricant that reduces friction between the mass body 135 and the antivibration container 132 and occupies the inner space so as to danip the vibration of the mass body 135.

The antivibration arrangement 130 is installed such that the antivibration container is positioned next to linear piping 122, so that the direction of the tube passage of the antivibration container 132 is perpendicular to the gravity direction.

The operation of the fourth embodiment of the antivibration arrangement in accordance with the present invention thus constructed will now be described.

The operation of the fourth embodiment is basically identical to the operation of the third embodiment, except that as the mass body 117 reduces friction between the mass body 135 and the antivibration container 132 upon vibration of the mass body 135, it occupies the movement space of the mass body 135, thereby generating a resistance against the movement of the mass body 135 and damping the vibration of the mass body 135, and the damping unit 137 serves to change the centroid of the antivibratino arrangement 130 while moving within the inner space of the antivibration container 132.

Preferably, the fastening unit 158 is bonded to the antivibration container 152 by the medium of synthetic resin or welded thereto according to the material of piping 142 in order to minimize the volume of the fastening unit.

The antivibration container 152 is constructed such that no on-off valve is formed and its inner space is sealed.

The operation of the fifth embodiment of the antivibration arrangement in accordance with the present invention thus constructed will now be described.

The operation of the fifth embodiment is basically identical to the operation of the first embodiment, except that the antivibration container 152 is formed in a U-shaped tube so that it can exert the same effect to a narrow space which is difficult for the antivibration container of a linear type.

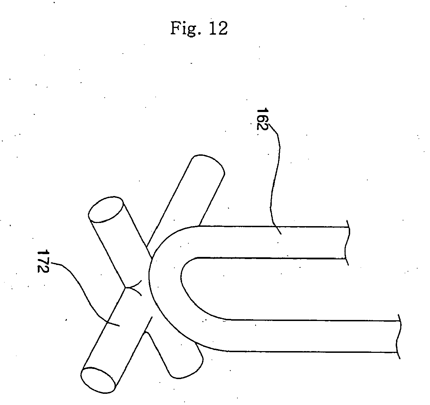

FIG.12 is a front block diagram illustrating a sixth embodiment of the antivibration arrangement in accordance with the present invention.

As illustrated therein, the antivibration arrangement is constructed in the same manner as the fifth embodiment, except for the shape of an antivibration container 172 and the method of installing the antivibration container 172 on piping of an air conditioner.

That is, the antivibration container 172 is formed in a cruciform shape where a short tube and a long tube perpendicularly penetrate through a middle part between them, and therefore the inner space of the antivibration container also has a cruciform shape.

Preferably, the antivibration container 172 is installed such that both opposite ends of the long tube face toward the main direction of the vibration of the piping.

The operation of the sixth embodiment of the antivibration arrangement in accordance with the present invention thus constructed will now be described.

The operation of the sixth embodiment is basically identical to the operation of the fifth embodiment, except that since the flowing material moves within the long tube and short tube of the antivibration container, if the vibration of the piping 162 does not appear centered in a certain linear direction but uniformly appears in vertical and horizontal directions, it moves the centroid of the antivibration container 172 back and forth, and side to side, along the direction of vibration, thereby controlling vibration in all directions.

The effects of the antivibration arrangement of the air conditioner in accordance with the present invention thus constructed will now be described. The antivibration arrangement of the air conditioner in accordance with the present invention is mounted on a structure of the air conditioner and reduces the vibration displacement of the structure, and accordingly has an advantage of preventing vibration of the structure and noise, impact and deformation of the structure caused by vibration.

Moreover, the antivibration arrangement of the air conditioner in accordance with the present invention is mounted on a structure of the air conditioner and changes the natural vibration frequency of the structure, and accordingly has an advantage of eliminating a resonance within the range of vibration frequencies occurring in the structure.

Moreover, the antivibration arrangement of the air conditioner in accordance with the present invention is able to control a vibration response appearing in different ways in different structures by control of the amount of the flowing material, and accordingly has an advantage of mass-producing antivibration containers of the same shape applicable to different structures.

FIG.11 is a perspective view illustrating a fifth embodiment of the antivibration arrangement in accordance with the present invention.

As illustrated therein, the antivibration arrangement 150, especially, a flowing material, is constructed in the same manner as the first embodiment, except for the shape of an antivibration container 152, an on-off valve and a fastening unit 158.

That is, the antivibration container 152 is formed in the shape of a tube that has the fastening unit 158 installed at the center portion and has a circular cross section, and this tube is formed in a U-shape having a curvature so that the center of the curvature is positioned in the coupling direction of the fastening unit 158.

## Claims

1. An antivibration arrangement 62, 112, 132, 152 and 172 of an air conditioner, including an antivibration container installed on a structure 52, 92, 102, 122, 142 and 162 of the air conditioner and having an inner space; and a flowing material 64, 114 and 134 contained in the antivibration container 62, 112, 132, 152 and 172 so as to be movable in the inner space of the antivibration container 62, 112, 132, 152 and 172 as the structure 52, 92, 102, 122, 142 and 162 of the air conditioner vibrates.

2. The antivibration arrangement as claimed in claim 1, wherein the flowing material 64, 114 and 134 is composed of at least either one of a solid and a fluid whose position and shape change in the inner space of the antivibration container 62, 112 and 132 in the direction in which gravity acts.

3. The antivibration arrangement as claimed inclaim 1 or2, wherein the flowing material 64, 114 and 134 includes: a mass body 115 and 135; and an elastic unit 116 and 136 installed between the antivibration container 112 and 132 and the mass body, for elastically supporting the mass body 115 and 135.

4. The antivibration arrangement as claimed in claim 3, wherein the flowing material 134 further includes a damping unit 137 installed between the antivibration container 62, 112, 132, 152 and 172 and the mass body 135, for alleviating the vibration of the mass body 135.

5. The antivibration arrangement as claimed in claim 3 or 4, wherein the mass body 115 and 135 is composed of a solid, and the elastic unit 116 and 136 is a spring.

6. The antivibration arrangement as claimed in claim 1, wherein the flowing material 134 includes: a mass body 135; and a damping unit 137 installed between the antivibration container 62, 112, 132, 152 and 172 and the mass body 135, for alleviating the vibration of the mass body 135.

7. The antivibration arrangement as claimed in claim 6, wherein the mass body 135 is composed of a solid, and the damping unit 137 is composed of a lubricant for reducing friction between the mass body 135 and the antivibration container 62, 112, 132, 152 and 172.

8. The antivibration arrangement as claimed in any of claims 1 to 7, wherein the antivibration container 62, 112, 132, 152 and 172 has an on-off valve 69 for putting in, discharging or sealing the flowing material.

9. The antivibration arrangement as claimed in any of claims 1 to 8, further including a fastening unit 68 for mounting the antivibration container 62, 112, 132, 152 and 172 on the piping 52, 92, 102, 122, 142 and 162 or compressor of the air conditioner.

10. The antivibration arrangement as claimed in claim 9, wherein the antivibration container 62, 112, 132, 152 and 172 is formed in a structure that is bilaterally symmetrical from the fastening unit 68.

11. The antivibration arrangement as claimed in any of claims 1 to 9, wherein the antivibration container 152 is formed in a tube shape with a curvature.

12. The antivibration arrangement as claimed in any of claims 1 to 9, wherein the antivibration container 172 is formed in a cruciform shape.

13. The antivibration arrangement as claimed in any of claims 1 to 12, wherein the flowing material 64, 114 and 134 moves in the inner space of the antivibration container 62, 112, 132, 152 and 172 so as to prevent a resonance within the range of vibration frequencies occurring in the structure when operating the air conditioner.
